# EUROPEAN PATENT APPLICATION

(11) **EP 3 653 313 A1**
(43) Date of publication of application: **20.05.2020**
(21) Application number: 18832475.0
(22) Date of filing: 27.06.2018
(51) Int. Cl.: B21D 5/02, B21D 43/18, B25J 15/06, B65H 3/08, B65H 5/14

(54) **WORKPIECE SUPPLY DEVICE ENABLING DECREASE IN INTERVAL DIMENSION OF BOTH RISING PORTIONS**

(30) Priority: 11.07.2017 JP 2017135183
(71) Applicant: Amada Holdings Co., Ltd., Isehara-shi, Kanagawa 259-1196 (JP)
(72) Inventor: SATO Masaaki, Isehara-shi Kanagawa 259-1196 (JP); TAKAHASHI Yuki, Isehara-shi Kanagawa 259-1196 (JP); IWANAGA Hiroshi, Isehara-shi Kanagawa 259-1196 (JP)
(74) Representative: Grünecker Patent- und Rechtsanwälte PartG mbB
(86) International application number: PCT/JP2018/024347
(87) International publication number: WO 2019/012990

(57) **Abstract**

Provided is a workpiece supply device capable of forming rising portions having a small interval dimension at the front and rear of a plate-shaped workpiece by a bending process. The workpiece supply device that supplies a plate-shaped workpiece to a press brake includes: a base frame 13 movable in X-, Y-, and Z-axis directions relative to a press brake 3 and provided with a Y-axis-direction guide member 15 such that both ends of the guide member 15 protrude in the Y-axis direction; a slider 17 movable along the guide member 15 and capable of being positioned at an end of the guide member 15; and a workpiece holder 19 provided at a center portion in the Y-axis direction of the slider 17 and capable of holding a workpiece W.

## Description

### TECHNICAL FIELD

The present invention relates to workpiece supply devices that supply a plate-shaped workpiece between the upper and lower pieces of tooling (punch and die) in a press brake. The present invention more particularly relates to a workpiece supply device that, when forming rising portions at both front and rear sides of a plate-shaped workpiece by a bending process, is capable of performing the bending process, holding the workpiece such that the interval dimension between the rising portions on both sides is, for example, a little larger than the diameter of the vacuum pad.

### BACKGROUND ART

When performing a bending process on a plate-shaped workpiece using a press brake, use of a workpiece supply device for supplying a workpiece such as, for example, an industrial robot has been proposed (for example, see Patent Literature 1).

### CITATION LIST

### PATENT LITERATURE

Patent Literature 1: Japanese Patent Application Publication No. H7-323334

### SUMMARY OF INVENTION

In the configuration disclosed in Patent Literature 1, a base frame is provided at the distal end of the robot arm of an industrial robot. The base frame is movable in the right-left direction (the X-axis direction), the front-back direction (the Y-axis direction), and the up-down direction (the Z-axis direction), following the movement of the robot arm. The base frame is provided with a Y-axis-direction guide member, which is provided with a movable slider having a vacuum pad serving as a workpiece holder. In addition, the base frame is pivotable such that the front and the rear are reversed.

Thus, a bending process (the first bending process) can be performed on the rear side of the workpiece by moving the slider to the rear side in the Y-axis direction and positioning the vacuum pad at a position closest to the press brake. After that, the front and rear of the base frame are reversed, the slider is moved again to the rear side, and a bending process (the second bending process) is performed on a portion that was the front side. Thus, rising portions can be formed by a bending process at the front side and rear side of the workpiece (see Fig. 3 in Patent Literature 1).

Meanwhile, rod-less cylinders are used as a driving unit for moving the slider forward and backward. The rod-less cylinders have head covers at both ends of the cylinder tubes. Typically, the slider is provided with external magnets that move integrally with internal magnets provided inside the cylinder tubes.

Hence, when the slider is moved and positioned at either end of the rod-less cylinders, the slider does not protrude from the head cover. Thus, as described earlier, when forming rising portions at both front and rear sides of a workpiece by a bending process, the interval between the front and rear rising portions is twice the sum of the dimension from the center in the front-back direction of the slider to the head cover, the dimension of the thickness of the head cover, and the dimension in the Y-axis direction from the end face of the head cover to the position of the bending process. Hence, it is difficult to form front and rear rising portions having a smaller interval dimension on a workpiece by a bending process.

The present invention has been made in light of the above problem, and an object thereof is to provide a workpiece supply device capable of forming rising portions having a small interval dimension at the front and rear of a plate-shaped workpiece by a bending process.

According to an aspect of the present invention, provided is a workpiece supply device that supplies a plate-shaped workpiece to a press brake, including: a base frame that is movable in X-, Y-, and Z-axis directions relative to a press brake and is provided with a Y-axis-direction guide member such that both ends of the guide member protrude in the Y-axis direction; a slider that is movable along the guide member and capable of being positioned at an end of the guide member; and a workpiece holder that is provided at a center portion in the Y-axis direction of the slider and is capable of holding a workpiece.

In the workpiece supply device, the base frame preferably has a driving unit that moves the slider along the guide member and a stroke-length increasing mechanism that is provided between the driving unit and the slider and transmits a stroke of the driving unit to the slider, increasing the length of the stroke.

In the workpiece supply device, the driving unit is preferably a rod-less cylinder, and the stroke-length increasing mechanism is preferably a link mechanism.

In the workpiece supply device, an auxiliary slider having a workpiece holder is preferably detachably provided at an end in the X-axis direction of the slider.

According to another aspect of the present invention, provided is a workpiece supply device that supplies a plate-shaped workpiece to a press brake, including: a base frame that is movable in X-, Y-, and Z-axis directions relative to a press brake and has a Y-axis-direction guide member; a slider that is movable along the Y-axis-direction guide member and has an X-axis-direction guide member; and an X-direction slider that is movable in the X-axis direction along the X-axis-direction guide member and has a workpiece holder capable of holding a workpiece.

In the workpiece supply device, the X-direction slider is preferably capable of protruding from the base frame in the Y-axis direction and X-axis direction.

The present invention makes it possible, when positioning the slider having the workpiece holders at an end of the guide member, to position part of the workpiece holders in the state where the part of the workpiece holders are at the same position as that of the end of the base frame or in the state where the part of the workpiece holders protrude from the end of the base frame. Thus, it is possible to handle a smaller dimension from a bending process position to the workpiece holder in a press brake.

### BRIEF DESCRIPTION OF DRAWINGS

[Fig. 1] Fig. 1 is a side view of a workpiece supply device according to a first embodiment of the present invention.
[Fig. 2] Fig. 2 is a perspective view of a main part of the workpiece supply device in Fig. 1.

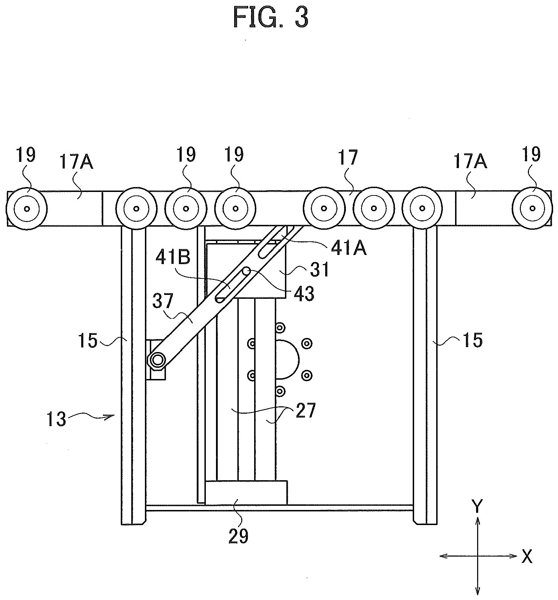

[Fig. 3] Fig. 3 is a plan view of the main part of the workpiece supply device in Fig. 1.

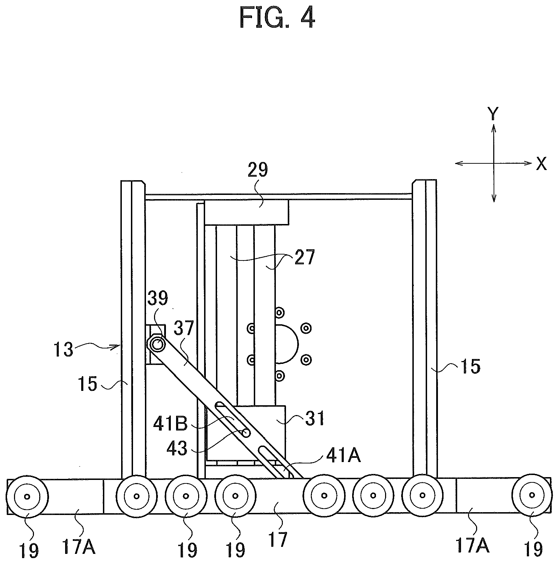

[Fig. 4] Fig. 4 is a plan view of the main part of the workpiece supply device in Fig. 1.
[Fig. 5] Fig. 5 is a perspective view of a main part of a workpiece supply device according to a second embodiment of the present invention.
[Fig. 6] Fig. 6 is a plan view of the main part of the workpiece supply device in Fig. 5.
[Fig. 7] Fig. 7 is a plan view of the main part of the workpiece supply device in Fig. 5.
[Fig. 8] Fig. 8 is a perspective view of a main part of a workpiece supply device according to a third embodiment of the present invention.
[Fig. 9] Fig. 9 is a perspective view of the main part of the workpiece supply device in Fig. 8.
[Fig. 10] Fig. 10 is a perspective view of the main part of the workpiece supply device in Fig. 8.
[Fig. 11] Fig. 11 is a perspective view of the main part of the workpiece supply device in Fig. 8.
[Fig. 12] Fig. 12 is a side view of the main part of the workpiece supply device in Fig. 8.
[Fig. 13] Fig. 13 is a side view of the main part of the workpiece supply device in Fig. 8.
[Fig. 14] Fig. 14 is a plan view of the main part of the workpiece supply device in Fig. 8.
[Fig. 15] Fig. 15 is a plan view of the main part of the workpiece supply device in Fig. 8.

### DESCRIPTION OF EMBODIMENTS

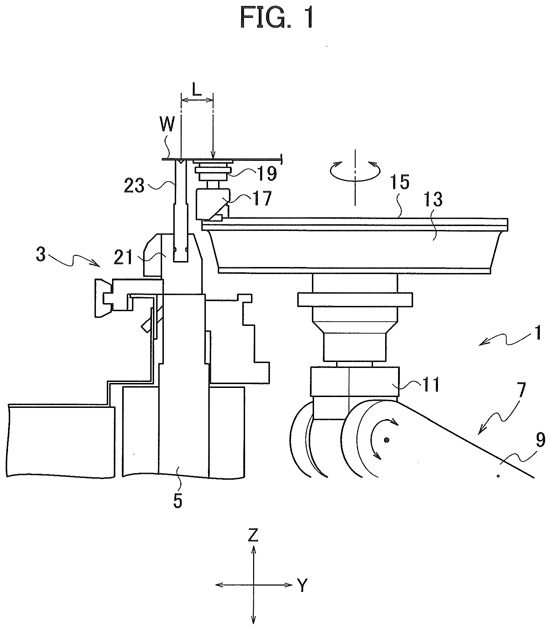

As conceptually and schematically illustrated in Fig. 1, a workpiece supply device 1 according to a first embodiment of the present invention is located in front of a lower table 5 in a press brake 3 (illustration of the overall configuration is omitted). To be more specific, the workpiece supply device 1 includes an industrial robot 7 (illustration of the overall configuration is omitted) located in front of the press brake 3.

The robot arm 9 of the industrial robot 7 has, at its distal end, an arm wrist 11 which is vertically rotatable around the axis of a horizontal wrist shaft (not illustrated) extending in a direction orthogonal to the longitudinal direction of the robot arm 9. This arm wrist 11 is provided with a base frame 13. This base frame 13 is rotatable on its axis extending in a direction orthogonal to the axis of the wrist shaft (horizontally rotatable on the axis which is vertical in Fig. 1). Specifically, the base frame 13 is rotatable such that the front and the rear can be reversed.

The base frame 13 is movable relative to the press brake 3 in the right-left direction (the X-axis direction), the front-back direction (the Y-axis direction), and the up-down direction (the Z-axis direction), by the operation of the industrial robot 7. The base frame 13 has Y-axis-direction guide members 15 at its upper portions. As illustrated in Fig. 1, both ends in the Y-axis direction of the guide members 15 protrude most in the Y-axis direction. In other words, the lower portions of the base frame 13 are shorter than the length in the Y-axis direction of the guide members 15.

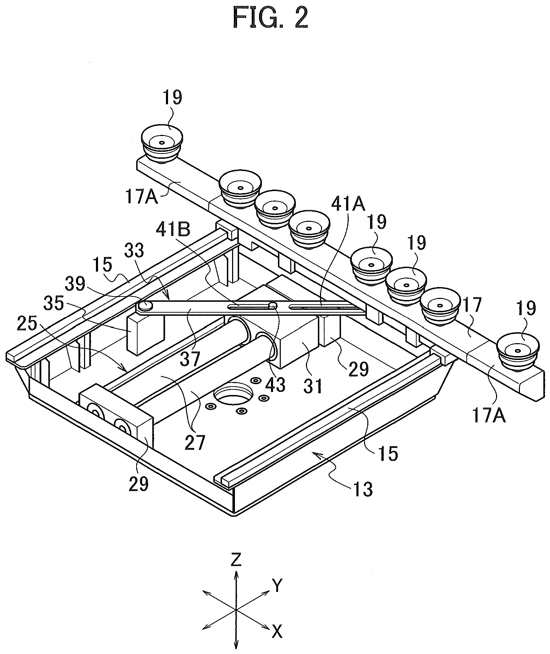

As illustrated in Fig. 2, the guide members 15 guide and support a slider 17 elongated in the X-axis direction such that the slider 17 is movable in the Y-axis direction. The slider 17 has, on its upper face, multiple vacuum cups 19 at appropriate intervals in the X-axis direction, the vacuum cups 19 serving as a workpiece holder capable of holding a workpiece W. The vacuum cups 19 are lined in order in the X-axis direction in the center in the Y-axis direction of the slider 17. The vacuum cup 19 has a diameter approximately equal to the width dimension in the Y-axis direction of the slider 17 or a diameter a little larger than the width dimension.

When the slider 17 is positioned at ends of the guide members 15, the slider 17 is positioned, as illustrated in Fig. 1, such that the side face in the front-back direction of the slider 17 protrudes a little from the ends of the guide members 15. Thus, when the slider 17 is positioned at the ends of the guide members 15, parts of the vacuum cups 19 can protrude a little from the ends of the guide members 15.

Thus, when the base frame 13 is closest to a die base 21 of the press brake 3 as illustrated in Fig. 1, the slider 17 can be closest to a die 23 held by the die base 21. At this time, the distance L from the center in the front-back direction of the slider 17 to the bending position of the die 23 can be small. Note that the vacuum cup 19 may come into contact with the front face of the die 23 (the right side face in Fig. 1). Specifically, the dimension from the center of the vacuum cup 19 to the bending position of the die 23 may be (the radius R of the vacuum cup 19 + the dimension of the shoulder width of the die 23).

The slider 17 detachably has, at its both ends in the X-axis direction, auxiliary sliders 17A (see Fig. 2) having a vacuum cup 19. This prevents both ends in the X-axis direction of a workpiece W from warping by its own weight in the case where the workpiece W has a long dimension in the X-axis direction. Thus, when a workpiece W is supplied to the die 23, the workpiece W can be supplied without interference between both ends in the X-axis direction of the workpiece W and the die 23.

Meanwhile, the base frame 13 has a Y-axis-direction rod-less cylinder 25 and serving as a driving unit for moving the slider 17 along the guide members 15. The rod-less cylinder 25 includes multiple cylinder tubes 27 extending in the front-back direction and head covers 29 at both ends of the cylinder tubes 27. The cylinder tubes 27 are provided with a slide block 31 that moves in the Y-axis direction integrally with pistons (not illustrated) inside the cylinder tubes 27.

The rod-less cylinder 25 is shorter than the guide members 15. Accordingly, the length of the stroke in the Y-axis direction of the slide block 31 is shorter than the length in the Y-axis direction of the guide members 15. Hence, to move the slider 17 such that the slider 17 can reach both ends of the guide members 15, the base frame 13 has a stroke-length increasing mechanism 33 for increasing the length of the stroke of the slider 17 relative to the slide block 31.

The above the stroke-length increasing mechanism 33 in the present embodiment is composed of a link mechanism. Specifically, as illustrated in Fig. 2, the base frame 13 has a support block 35 at an intermediate position in the Y-axis direction of the base frame 13 and on the minus side in the X-axis direction. This support block 35 supports one end of a link member 37 via a pivot shaft 39 such that the link member 37 can pivot horizontally.

The link member 37 has a slot 41A at the other end, and a hinge pin (not illustrated) provided at an intermediate position in the X-axis direction of the slider 17 is slidably fitted in the slot 41A. The link member 37 has a slot 41B, which is in parallel with the longitudinal direction of the link member 37, at an intermediate position in the longitudinal direction of the link member 37. Engaged with the above slot 41B is a pin 43 standing integrally on the slide block 31 such that the pin 43 can slide relative to the slot 41B.

Thus, when the slide block 31 of the rod-less cylinder 25 moves in the Y-axis direction, the stroke in the Y-axis direction of the slide block 31 is transmitted to the slider 17 with the length of the stroke increased via the link member 37. With this, even in the case where the length of the stroke of the slide block 31 is shorter than the length in the Y-axis direction of the guide members 15, it is possible to move the slider 17 to both ends of the guide members 15 and position the slider 17 there.

As already understood, a bending process is performed on one side of a workpiece W with the slider 17 positioned at ends on one side of the guide members 15 as illustrated in Fig. 1. After that, the front and rear of the base frame 13 are reversed. Then, a bending process is performed on the other side of the workpiece W with the slider 17 positioned at the ends on the other side of the guide members 15. In this way, rising portions can be formed at both the front and rear sides of the workpiece W by the bending process.

In this case, positioning can be performed such that the vacuum cups 19 holding the workpiece W come into contact with the front face of the die 23. The interval dimension between the rising portions at the front and rear of the workpiece W can be the dimension (the diameter of the vacuum pad 19 + twice the shoulder with of the die 23). Thus, it is possible to achieve a small interval dimension between the rising portions at the front and rear.

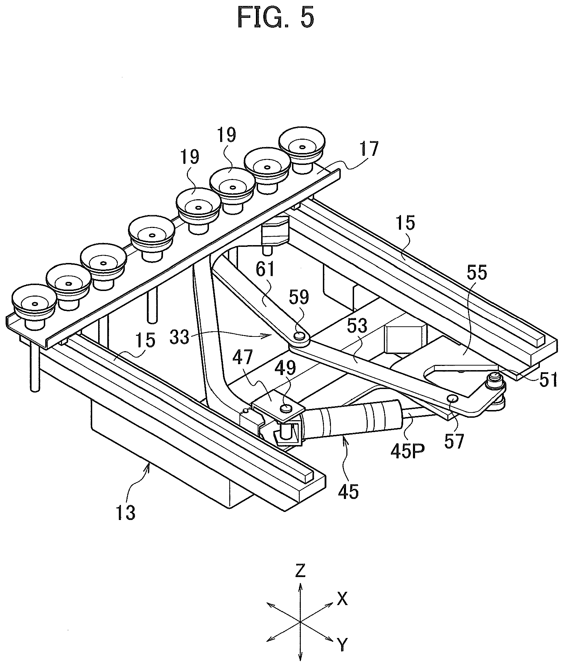

Figs. 5 to 7 are diagrams illustrating a second embodiment of the present invention. Note that in the second embodiment, the constituents having the same functions as foregoing constituents have will be denoted by the same symbols, and repetitive description will be omitted.

The second embodiment employs a common fluid pressure cylinder 45 as a driving unit for moving the slider 17 in the Y-axis direction. Specifically, the fluid pressure cylinder 45 is provided to a bracket 47 provided on the base frame 13 via a pivot shaft 49 such that the fluid pressure cylinder 45 is horizontally pivotable. The fluid pressure cylinder 45 has a piston rod 45P that can move into and out of the fluid pressure cylinder 45 (expand and contract), and the distal end of the piston rod 45P is pivotally connected to the proximal end of a bell crank 53 via a pivot shaft 51. The bell crank 53 constitutes part of the stroke-length increasing mechanism 33.

A portion near the flexion portion of the bell crank 53 is supported by a bracket 55, provided on the base frame 13, via a pivot shaft 57 such that the bell crank 53 is horizontally pivotable. The distal end of the bell crank 53 is pivotally connected to the distal end of a link member 61 via a hinge pin 59. The proximal end of the link member 61 is pivotally attached to a position near the center of the slider 17 via a pivot shaft (not illustrated).

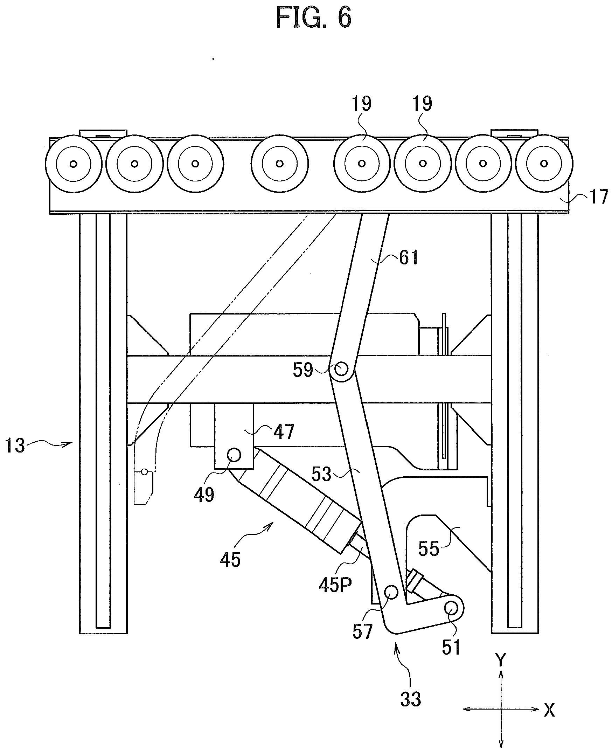

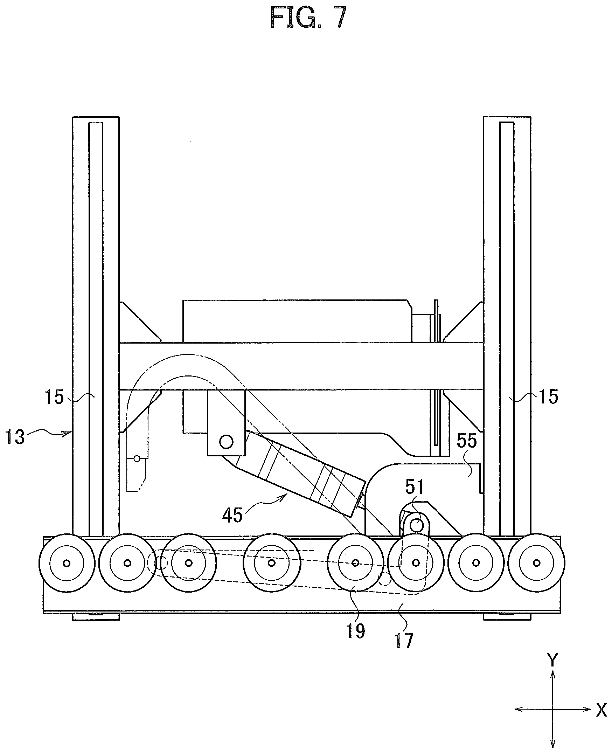

With the above configuration, in the case where the piston rod 45P is operated to be pulled into the fluid pressure cylinder 45 when the slider 17 is positioned at one end in the Y-axis direction as illustrated in Figs. 5 and 6, the slider 17 is moved to the other end in the Y-axis direction, as illustrated in Fig. 7, via the bell crank 53 and link member 61 constituting parts of a stroke-length increasing mechanism.

Thus, the second embodiment also provides the same or similar effects as in the foregoing first embodiment.

Note that the present invention is not limited to the embodiments as described above, but other embodiments are possible by making appropriate changes. Specifically, the link mechanism is not limited to the ones as described above, but it is possible to use, for example, a pantograph mechanism. In addition, the stroke-length increasing mechanism may have a configuration combining a large-diameter cylinder and a small-diameter cylinder in which the length of the stroke of the small-diameter cylinder is larger than the length of the stroke of the large-diameter cylinder. In other words, the stroke-length increasing mechanism may employ various configurations.

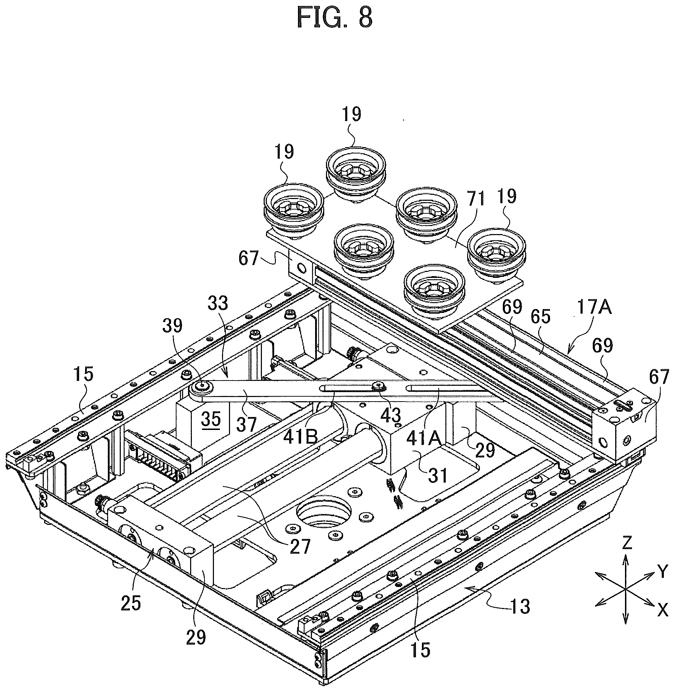

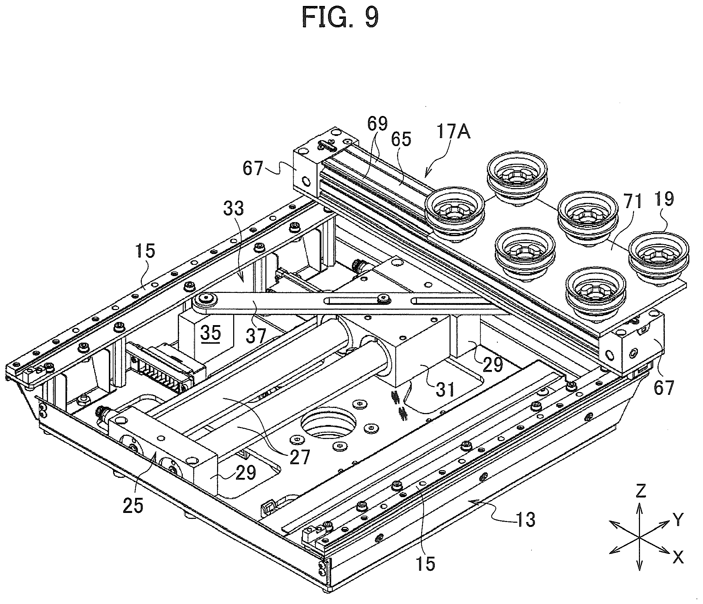

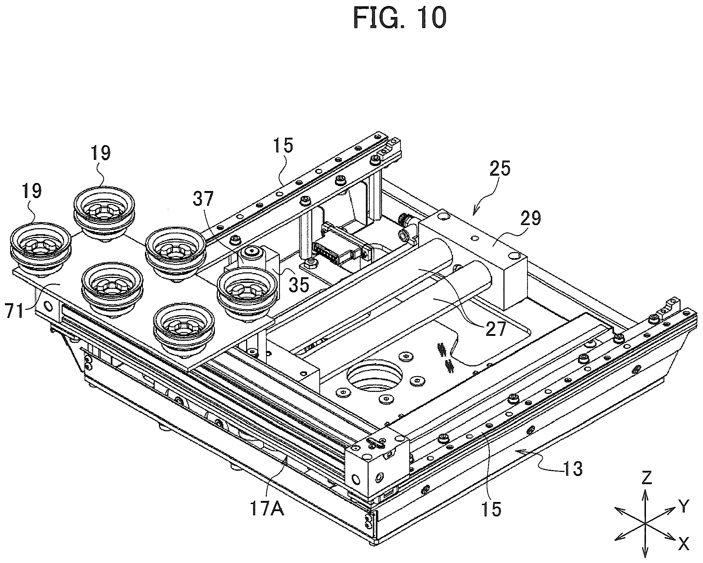

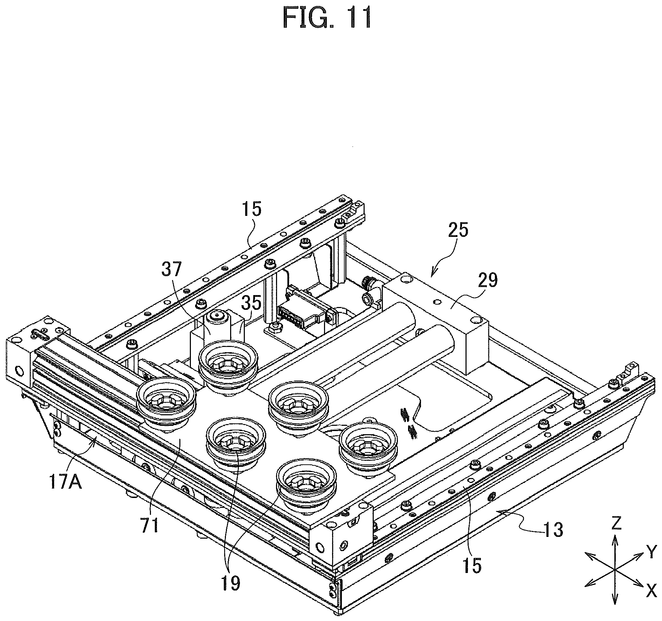

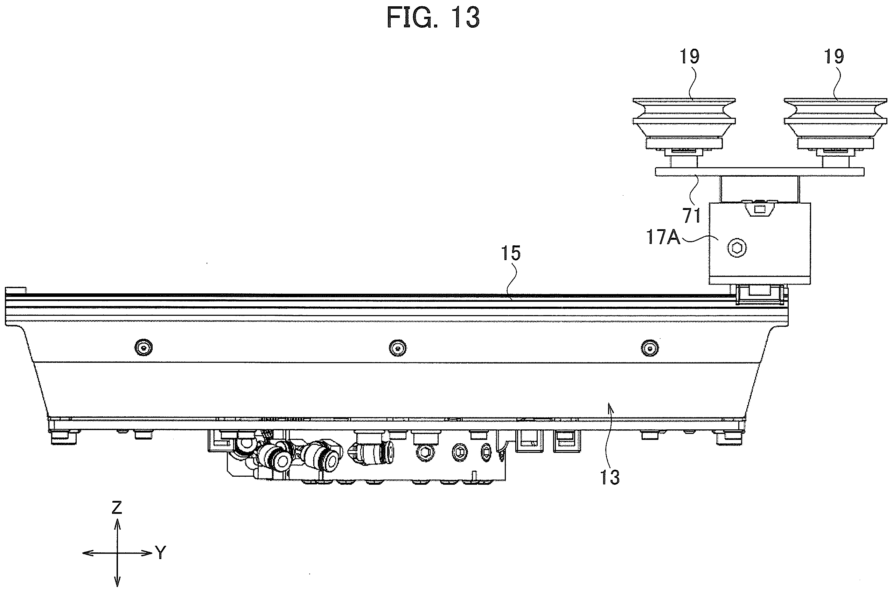

Figs. 8 to 15 are diagrams illustrating a third embodiment of the present invention. Note that in this third embodiment, the constituents having the same functions as foregoing constituents have will be denoted by the same symbols, and repetitive description will be omitted.

In this third embodiment, a slider 17A corresponding to the slider 17 is an X-axis-direction rod-less cylinder. Specifically, the slider 17A has an X-axis-direction cylinder tube 65 which constitutes the rod-less cylinder. The cylinder tube 65 are provided with head covers 67 at its both ends, and the head covers 67 are connected to each other by multiple X-axis-direction guide members 69.

The cylinder tube 65 has inside a piston (not illustrated) which is movable in the X-axis direction. The cylinder tube 65 also has a slide block (not illustrated) that moves in the X-axis direction integrally with the piston. This slide block is integrally connected to an X-direction slider 71. The X-direction slider 71 is movably supported by the guide members 69.

The X-direction slider 71 is formed of a plate-shaped member as illustrated in Fig. 8. The length dimension in the X-axis direction of the X-direction slider 71 is set to approximately half the length in the X-axis direction of the slider 17A. Note that the length dimension in the X-axis direction of the X-direction slider 71 is not limited to a length approximately half the length in the X-axis direction of the slider 17A, but it may be, for example, one-third the length. Specifically, the X-direction slider 71 moves in the X-axis direction along the guide members 69 and can be positioned at multiple positions in the X-axis direction.

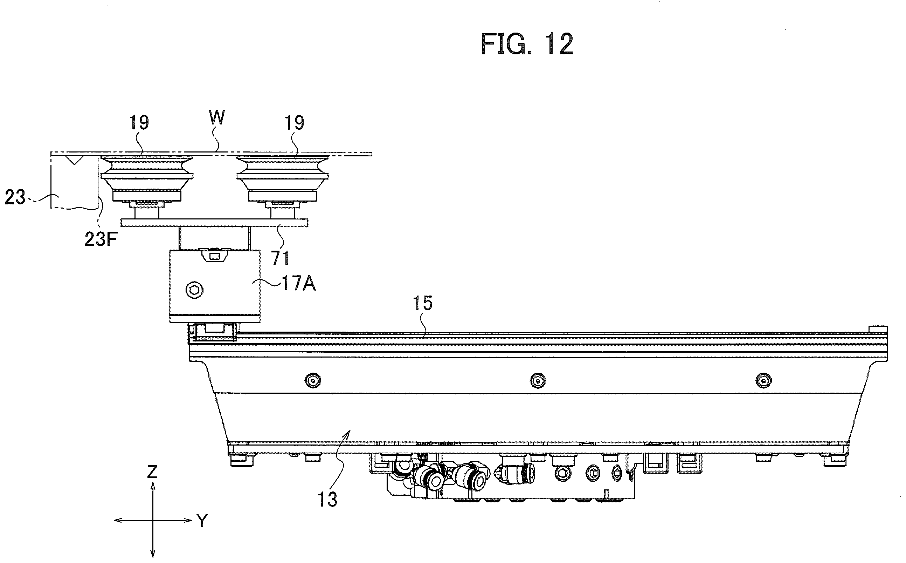

The width dimension in the Y-axis direction of the X-direction slider 71 is larger than the width dimension in the Y direction of the slider 17A, as illustrated in Fig. 12. In other words, the X-direction slider 71 protrudes from the slider 17A on both sides in the front-back direction (the Y-axis direction). The X-direction slider 71 has multiple vacuum cups 19 on it as a workpiece holder.

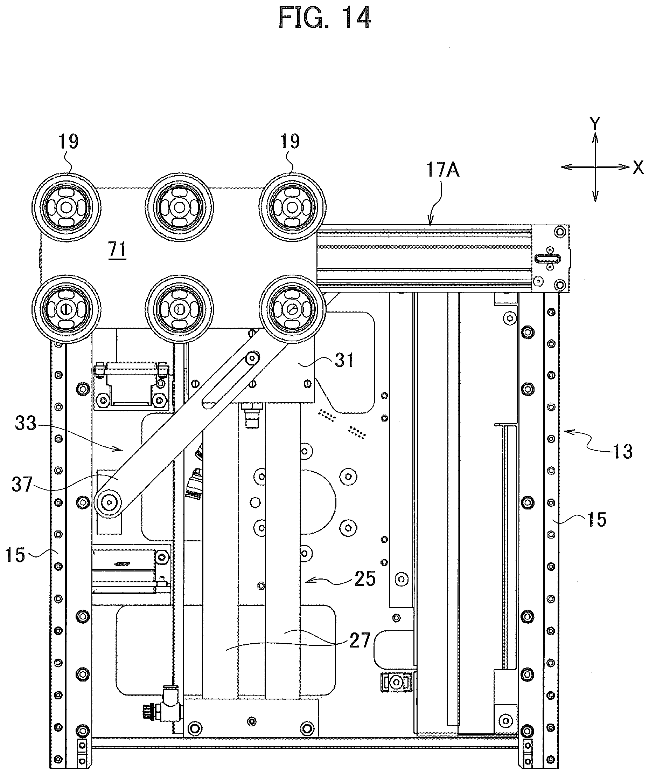

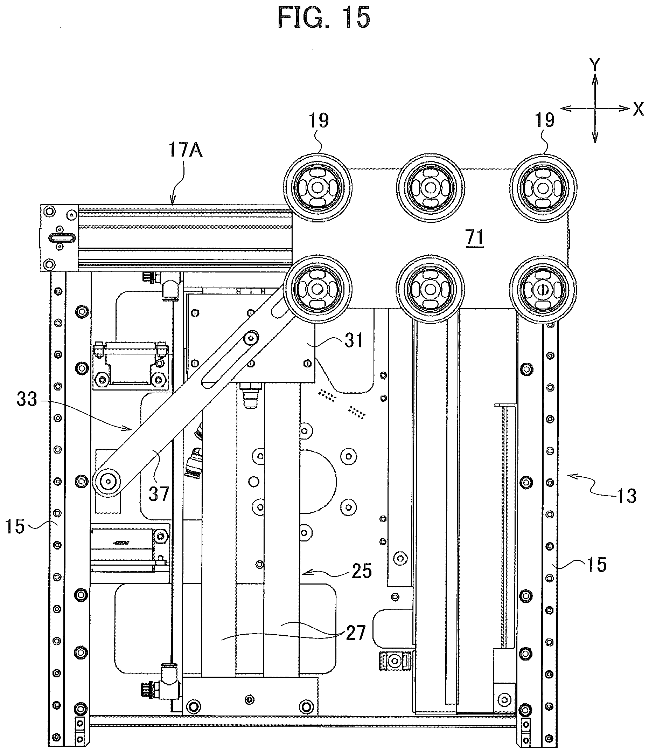

In the present embodiment, the vacuum cups 19 are arranged in multiple lines extending in the Y-axis direction (the front-back direction) on the X-direction slider 71 as illustrated in Fig. 12. Part of the vacuum cups 19 located near both sides in the front-back direction protrude from the X-direction slider 71 in the front-back direction. Thus, the vacuum cups 19 holding a workpiece W can come into contact with the front face 23F of the die 23. In addition, the vacuum cups 19 are arranged such that part of the vacuum cups 19 can protrude from the sides in the X-axis direction (the right-left direction) of the base frame 13, as illustrated in Figs. 14 and 15.

In this embodiment, the X-direction slider 71 can move in the front-back direction and the right-left direction relative to the base frame 13. With this configuration, the X-direction slider 71 can be positioned at both right and left sides of the base frame 13 and also can be positioned at both front and rear side of the base frame 13. This makes it possible to position a workpiece W at positions associated with pieces of tooling provided at multiple positions in the right-left direction in the press brake. Thus, a bending process can be performed with the front and rear of the workpiece W reversed.

As already understood, it is possible to position a workpiece W at positions associated with pieces of tooling provided at multiple positions in the right-left direction in the press brake and perform step bending easily. In addition, since it is easy to reverse the front and rear of the workpiece W, in the case where a bending process is performed that involves both reversing the front and rear of the workpiece W and step bending, bending can be performed successively with the vacuum cups 19 holding the workpiece W. This improves efficiency in the bending process.

## Claims

1. A workpiece supply device that is configured to supply a plate-shaped workpiece to a press brake, comprising:
a base frame that is movable in X-, Y-, and Z-axis directions relative to a press brake and is provided with a Y-axis-direction guide member such that both ends of the guide member protrude in the Y-axis direction;
a slider that is movable along the guide member and capable of being positioned at an end of the guide member; and
a workpiece holder that is provided at a center portion in the Y-axis direction of the slider and is capable of holding a workpiece.

2. The workpiece supply device according to claim 1, wherein
the base frame has
a driving unit that moves the slider along the guide member and
a stroke-length increasing mechanism that is provided between the driving unit and the slider and is configured to increase a length of a stroke of the driving unit and transmit the stroke to the slider.

3. The workpiece supply device according to claim 2, wherein
the driving unit is a rod-less cylinder, and
the stroke-length increasing mechanism is a link mechanism.

4. The workpiece supply device according to claim 2 or 3, wherein
an auxiliary slider having a workpiece holder is detachably provided at an end in the X-axis direction of the slider.

5. A workpiece supply device that is configured to supply a plate-shaped workpiece to a press brake, comprising:
a base frame that is movable in X-, Y-, and Z-axis directions relative to a press brake and has a Y-axis-direction guide member;
a slider that is movable along the Y-axis-direction guide member and has an X-axis-direction guide member; and
an X-direction slider that is movable in the X-axis direction along the X-axis-direction guide member and has a workpiece holder capable of holding a workpiece.

6. The workpiece supply device according to claim 5, wherein
the X-direction slider is capable of protruding from the base frame in the Y-axis direction and the X-axis direction.
